# FASCICULE DE BREVET EUROPEEN

(11) **EP 4 035 661 B1**
(45) Date de publication et mention de la délivrance du brevet: **29.04.2026**
(21) Numéro de dépôt: 22153037.1
(22) Date de dépôt: 24.01.2022
(51) Int. Cl.: A61K 9/50, B29C 67/24

(54) **PROCEDE DE FABRICATION D'UN MATERIAU COMPOSITE COMPRENANT UN POLYMERE ET DES NANOMATERIAUX**
VERFAHREN ZUR HERSTELLUNG EINES VERBUNDMATERIALS, DAS EIN POLYMER UND NANOMATERIALIEN UMFASST
METHOD FOR MANUFACTURING A COMPOSITE MATERIAL COMPRISING A POLYMER AND NANOMATERIALS

(30) Priorité: 28.01.2021 FR 2100814
(43) Date de publication de la demande: 03.08.2022
(73) Titulaire: Commissariat à l'Energie Atomique et aux Energies Alternatives, 75015 Paris (FR)
(72) Inventeur: VIALA, Bernard, 38054 GRENOBLE CEDEX 09 (FR)
(74) Mandataire: Santarelli

(56) Documents cités:
- WO-A1-2009/103070
- FR-A1- 3 074 495
- US-A1- 2012 071 682
- US-A1- 2013 168 598
- US-A1- 2013 171 352
- US-A1- 2013 171 359

## Description

### DOMAINE TECHNIQUE

La présente invention se rapporte au domaine général des matériaux composites comprenant un polymère et des nanomatériaux, par exemple des nanoparticules.

L'invention concerne un procédé de fabrication d'un tel matériau composite.

L'invention trouve des applications dans de nombreux domaines industriels, et notamment pour la fabrication de diélectriques pour les capacités, pour la fabrication de matériaux magnétiques pour les inductances, ou encore pour la fabrication de revêtements de surface.

L'invention est particulièrement intéressante puisqu'elle permet d'obtenir des matériaux composites homogènes.

### ÉTAT DE LA TECHNIQUE ANTÉRIEURE

Actuellement, pour former un matériau composite comprenant un polymère et des nanomatériaux, par exemple des nanoparticules, on prépare une première solution contenant un premier solvant et un polymère ainsi qu'une deuxième solution (dispersion) contenant un deuxième solvant et les nanoparticules. On mélange les deux solutions, puis on dépose la solution obtenue sur un substrat ou on l'injecte dans un moule.

La concentration en polymère est un paramètre essentiel car elle détermine au premier ordre la viscosité de la solution finale. Elle joue donc un rôle essentiel sur la qualité du dépôt.

Or, lorsque l'on ajoute la deuxième solution contenant les nanomatériaux à la solution contenant le polymère, on provoque automatiquement une diminution de la concentration du polymère, ce qui modifie la viscosité de la solution. Par exemple, si la concentration en polymère est réduite d'un facteur 2, cela peut diminuer la viscosité d'un facteur 10. Il sera alors difficile de déposer correctement le matériau composite (épaisseur trop fine, manque de matière, mauvaise uniformité etc.).

Afin de remédier à cet inconvénient, plusieurs solutions pourraient être envisagées.

La première solution consiste à ajouter une poudre de nanomatériaux directement dans la solution contenant le polymère. Mais, une telle action conduit le plus souvent à la formation d'agrégats. C'est pour cela que les nanomatériaux sont dispersés dans un solvant adapté avant d'être utilisés.

A l'inverse on pourrait ajouter une poudre de polymère ou des granules de polymère directement dans la dispersion de nanomatériaux avec la bonne proportion pour obtenir la viscosité souhaitée. Mais, une telle action conduit le plus souvent à la sédimentation des nanoparticules au fond du flacon avant la dissolution complète de la poudre ou des granules de polymère parce que le temps de dissolution des polymères (par exemple plusieurs heures) est en général très supérieur au temps de sédimentation des nanomatériaux (par exemple de l'ordre de la dizaine de minutes pour des nanoparticules magnétiques). Dans le cas contraire, le polymère ne serait pas totalement dissous.

Une autre solution consiste à sécher la dispersion de nanomatériaux en faisant évaporer le solvant qui a servi à les disperser. Le produit sec peut être ensuite récupéré pour être ajouté à la solution de polymère. Mais l'action de sécher la dispersion de nanoparticules conduit en général à leur ré-agglomération. En effet, il est connu qu'il y a des solvants qui sont plus favorables à la dispersion de certains nanomatériaux que d'autres : le solvant utilisé pour dissoudre le polymère (généralement choisi en fonction de la technique de dépôt et/ou l'application visée) n'est pas forcément un bon solvant pour le résidu sec. Les nanomatériaux ne sont alors pas dispersés de façon homogène. Le mélange obtenu peut, par exemple, présenter un surnageant en surface ou des sédiments au fond du flacon.

Il n'y a donc, actuellement, pas de solution satisfaisante pour préparer une solution, homogène et ayant la viscosité adéquate, afin de fabriquer un matériau composite.

FR 3 074 495 A1 décrit un procédé de fabrication d'un composite comprenant un premier polymère et des luminophores, le procédé comportant les étapes suivantes: fournir une solution comprenant un premier solvant, un premier polymère, des luminophores et un deuxième solvant, dont la température d'ébullition est supérieure d'au moins 30°C à la température du premier solvant; dépôt de la solution dans les cavités et évaporation des solvants.

### EXPOSÉ DE L'INVENTION

Un but de la présente invention est de proposer un procédé remédiant aux inconvénients de l'art antérieur et, en particulier, un procédé permettant de former un matériau composite homogène, le procédé devant être simple à mettre en œuvre.

Pour cela, la présente invention propose un procédé de fabrication d'un matériau composite comprenant un polymère et des nanomatériaux, le procédé comportant les étapes suivantes :
a) dissolution du polymère dans un premier solvant, moyennant quoi on obtient une première solution,
b) dispersion des nanomatériaux dans un deuxième solvant différent du premier solvant, moyennant quoi on obtient une deuxième solution ;
c) mélange des deux solutions, moyennant quoi on obtient une troisième solution,
d) chauffage de la troisième solution de manière à faire évaporer au moins 10% volumique du deuxième solvant, et de préférence de manière à faire évaporer totalement le deuxième solvant, moyennant quoi on obtient une solution finale,
e) dépôt de la solution finale sur un substrat ou injection de la solution finale dans un moule et évaporation du premier solvant, et éventuellement évaporation de la fraction volumique du deuxième solvant non évaporée lors de l'étape d),
   le deuxième solvant a un point d'ébullition inférieur d'au moins 30°C au point d'ébullition du premier solvant, et
   la viscosité de la solution finale est égale à 20% près et, de préférence, est égale à 10% près à la viscosité de la première solution.

L'invention se distingue fondamentalement de l'art antérieur par l'utilisation de deux solvants distincts, ayant des points d'ébullition différents. Le changement de solvant est effectué en restant tout le temps en milieu liquide, c'est-à-dire sans passer par une étape intermédiaire de séchage, ce qui in fine assure la bonne dispersion des nanomatériaux dans la solution finale.

Il est ainsi possible, dans un premier temps, de parallèlement dissoudre facilement le polymère dans la première solution et de disperser facilement les nanomatériaux dans la deuxième solution, puis, suite au mélange des deux solutions et à l'évaporation préférentielle du deuxième solvant, de déposer facilement la solution finale, qui présente une viscosité adéquate et une bonne dispersion des nanomatériaux, ce qui conduit à la formation d'un matériau composite homogène.

Avantageusement, le deuxième solvant a un point d'ébullition inférieur d'au moins 50°C à celui du premier solvant.

Avantageusement, le premier solvant a un point d'ébullition supérieur à 100°C et le deuxième solvant a un point d'ébullition inférieur à 90°C. Les solvants à bas point d'ébullition (inférieur 90°C voire inférieur à 70°C) ne sont, en général, pas utilisés comme solvant d'application parce qu'ils sèchent trop vite et ne permettent pas de déposer correctement un film continu sur un substrat ou de remplir intégralement un moule. En pratique, la solution sèche avant d'être complètement étalée ou dispensée, ce qui conduit à un matériau de mauvaise qualité. Cependant, l'utilisation d'un tel solvant est particulièrement avantageuse dans le cadre de l'invention.

Avantageusement, le premier solvant est choisi parmi les acétates d'éther méthylique de propylène glycol (PGMEA), les Éthyl Lactates (EEP, Éthyl 3-Éthoxy Propionate), le xylène, l'anisole et le cyclopentanone. Ces solvants possèdent généralement des points d'ébullition élevés (130°C à 190°C).

Avantageusement, le deuxième solvant est choisi l'acétone, le benzène, la butadone, l'acétate d'éthyle, l'hexane, le 2-propanol, le chloroforme, le dichloroéthane et le dichlorométhane.

Avantageusement, le premier solvant est le PGMEA et le deuxième solvant est un solvant chloré, tel que le chloroforme.

Avantageusement, le polymère est choisi parmi un polystyrène, un polyépoxyde, un poly(fluorure de vinylidène), un polyméthacrylate et un polyétherimide.

Selon une première variante de réalisation avantageuse, les nanomatériaux sont choisis parmi des nanoparticules.

Les nanoparticules peuvent être des nanoparticules à structure cœur coquille, par exemple, formées d'un cœur métallique à base de Cu, Ni, Co ou Fe, enrobé par une couche de carbone.

Les nanoparticules peuvent être magnétiques.

Les nanoparticules peuvent être ferroélectriques.

Les nanomatériaux peuvent être des semi-conducteurs à grand gap.

Selon une autre variante de réalisation avantageuse, les nanomatériaux sont choisis parmi les nano-feuillets de nitrure de bore hexagonal (h-BN) et les nano-diamants.

Avantageusement, le deuxième solvant est un solvant chloré et les nanomatériaux sont nitrurés ou carbonés. Les nanomatériaux peuvent être nitrurés ou carbonés dans la masse (cœur) ou uniquement en surface (coquille).

Avantageusement, l'étape b) est réalisée sous ultrasons. On obtient ainsi un mélange homogène.

Le procédé présente de nombreux avantages :
- par rapport à l'art antérieur, il n'y a pas d'étape de séchage intermédiaire, ce qui simplifie le procédé et limite les risques de ré-agglomération des nanomatériaux à l'étape de séchage intermédiaire,
- la viscosité de la solution finale est inchangée ou semblable à celle de la première solution,
- les nanomatériaux sont mieux dispersés dans le polymère,
- l'épaisseur, l'uniformité et l'homogénéité du matériau déposé ou moulé sont mieux contrôlées,
- les propriétés physiques des films déposés sont améliorées ; par exemple, comme les pertes diélectriques ou magnétiques sont dépendantes de la dimension des agrégats, les facteurs de qualité des matériaux obtenus avec ce procédé sont augmentés. Il est ainsi possible d'obtenir des composants, tels que des capacités et des inductances, très performants.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### EXPOSÉ DÉTAILLÉ DE MODES DE RÉALISATION PARTICULIERS

Le procédé de fabrication d'un matériau composite comprenant un polymère et des nanomatériaux comporte les étapes suivantes :
a) dissolution du polymère dans un premier solvant, moyennant quoi on obtient une première solution,
b) dispersion des nanomatériaux dans un deuxième solvant différent du premier solvant, moyennant quoi on obtient une deuxième solution (aussi appelée dispersion), le deuxième solvant a un point d'ébullition inférieur d'au moins 30°C à celui du premier solvant,
c) mélange des deux solutions, moyennant quoi on obtient une troisième solution,
d) chauffage de la troisième solution de manière à faire évaporer au moins 10% volumique du deuxième solvant, et de préférence de manière à faire évaporer totalement le deuxième solvant, moyennant quoi on obtient une solution finale, la viscosité de la solution finale est égale à 20% près à la viscosité de la première solution, de préférence à 10% à la viscosité de la première solution et encore plus préférentiellement à 5% près à la viscosité de la première solution,
e) dépôt de la solution finale sur un substrat ou injection de la solution finale dans un moule et évaporation du premier solvant, et éventuellement de la partie du deuxième solvant non évaporée lors de l'étape d).

Par égale à 10% près, on entend que la valeur de la viscosité de la solution finale ne varie pas de plus de 10% de la valeur de la viscosité de la première solution.

Lors de l'étape a), on dissout un polymère dans un solvant.

Le premier solvant est, de préférence un solvant organique.

Il s'agit, par exemple, d'un solvant utilisé avec des résines de lithographie ou les encres de sérigraphie comme le PGMEA, l'EEP, le Xylène, l'Anisole ou le Cyclopentanone. Par exemple, la densité du PGMEA est de 0.96 avec un point d'ébullition : P_{B}= 146°C.

Alternativement, le premier solvant pourrait être de l'eau.

Le premier solvant a un fort point d'ébullition (de préférence supérieur ou égal à 100°C et encore plus préférentiellement strictement supérieur à 100°C).

Le solvant sert à la fois à dissoudre et à diluer le polymère. C'est la concentration en polymère dans le premier solvant qui détermine la viscosité de la première solution.

Le polymère peut être un polymère photosensible ou électroactif.

Le polymère est, de préférence, choisi parmi les polystyrènes (PS), les polyépoxydes, les poly(fluorure de vinylidènes) (PVDF, P(VDF-TerFe), P(VDF-TerFe-CTFE ou CFE), un polyméthacrylate (PMMA) et un polyétherimide (PEI).

Plusieurs polymères peuvent être utilisés en mélange.

La viscosité de la première solution est, par exemple, comprise entre 1000 et 10000 cP à 25°C.

Lors de l'étape b), on disperse les nanomatériaux dans le deuxième solvant. Il est possible de réaliser cette étape à l'aide d'ultrasons.

Le deuxième solvant est un solvant organique.

Le deuxième solvant a un faible point d'ébullition (de préférence strictement inférieur à 90°C).

Le deuxième solvant est, par exemple, l'acétone, le benzène, la butadone, l'acétate d'éthyle, l'hexane, le 2-propanol, le chloroforme, le dichloroéthane et le dichlorométhane.

Les solvants chlorés comme le chloroforme, le dichloroéthane et le dichlorométhane sont particulièrement intéressant avec des nanomatériaux carbonés ou nitrurés comme les nanotubes de carbone, le noir de carbone, les nanoparticules enrobées d'une couche de carbone, les nanofeuillets de nitrure de bore etc.

Avantageusement, l'ultra-sonication, utilisée pour disperser les nanomatériaux, provoque une décomposition partielle du chloroforme qui libère des radicaux de chlore qui vont pouvoir se greffer par exemple à la surface de nanotubes de carbone à travers des liaisons non covalentes. Le chlore étant une grosse molécule, il peut se greffer sur les nanomatériaux et générer un encombrement stérique (analogue aux surfactants) et aider à les séparer, ce qui les maintient plus longtemps en suspension (temps de sédimentation augmenté).

Les nanomatériaux peuvent être des nanomatériaux 1D, 2D ou 3D.

Les nanomatériaux sont, par exemple, des nanoparticules. Il peut s'agir de nanoparticules formées de métaux nobles, de métaux non-nobles, ou encore de matériaux magnétiques, de matériaux semi-conducteurs, d'oxydes métalliques, ou encore de matériaux ferroélectriques, etc.

On choisira, de préférence, des nanoparticules à structure cœur-coquille. Le cœur, par exemple métallique, est enrobé par une couche de carbone ou une couche d'oxyde, notamment en silice ou en alumine.

De préférence, le cœur est à base de Cu, Ni, Co ou Fe et la coquille est en carbone, et notamment constituée de quelques feuillets de graphène. Elle peut être également en carbone amorphe ou en graphite.

Les nanomatériaux peuvent être également des nano-feuillets de nitrure de bore hexagonal (h-BN) ou encore des nano-diamants.

Plusieurs types de nanomatériaux peuvent être utilisés en mélange.

La concentration de la suspension en nanomatériaux est, avantageusement, entre 0,01 et 0,2g/mL, par exemple de 0,1 g/mL.

La concentration en nanomatériaux en suspension dans le deuxième solvant est choisie de manière à avoir une solution finale ayant le bon rapport quantité de nanomatériaux / quantité de polymère pour obtenir la concentration souhaitée en nanomatériaux dans le polymère sec (après évaporation des solvants).

La présence de nanomatériaux en suspension dans un solvant ne modifie pas significativement sa viscosité (on considère qu'elle est inchangée).

Lors de l'étape c), on mélange la première solution et la deuxième solution.

On obtient une solution nanocomposite formée d'une suspension de nanomatériaux dans une matrice liquide de polymère avec un rapport quantité de nanomatériaux sur quantité de polymère prédéterminé.

Après mélange, la viscosité de la solution diminue du fait de la dilution du polymère. La viscosité de la solution après mélange est, par exemple, entre 1 et 10cP à 25°C.

Le premier solvant et le deuxième solvant sont avantageusement miscibles.

De préférence, le premier solvant est le PGMEA et le deuxième solvant est un solvant chloré. Le chloroforme est un solvant plus dense (1,48) que le PGMEA, apte à garder les nanomatériaux en suspension plus longtemps, et ayant un point d'ébullition nettement plus faible : P_{B} = 61°C.

On choisira, de préférence, le PGMEA et le chloroforme.

Lors de l'étape d), on chauffe la troisième solution. On chauffe cette solution à une température au voisinage de la température d'ébullition du deuxième solvant et en dessous de la température d'ébullition du premier solvant. Par au voisinage on entend à ±20°C, et de préférence ±10°C.

On peut chauffer au-dessus de la température d'ébullition du deuxième solvant.

Il est également possible de chauffer de 0 à 20°C, et de préférence de 0 à 10°C, en dessous de la température d'ébullition du deuxième solvant pour éviter la formation de bulles

On provoque ainsi une évaporation partielle ou totale du deuxième solvant. Par évaporation partielle, on entend qu'au moins 10%, 20%, 30% 40%, 50%, 60%, 70%, 80% ou 90% volumique sont évaporés.

A titre illustratif, le tableau suivant répertorie les viscosités de différentes solutions à l'issue de l'étape d), en fonction de la fraction volumique du deuxième solvant qui a été évaporée.

| **Evaporation du deuxième solvant (% vol.)** | 0 | 20 | 50 | 100 |
|---|---|---|---|---|
| **Viscosité à 25°C (cP)** | 1-10 | 10-100 | 100-1000 | 1000-10000 |

On conserve la totalité (100% volumique) voire la quasi-totalité (au moins 95% volumique) du premier solvant (on considère que l'évaporation résiduelle est négligeable). Quelques minutes suffisent pour faire évaporer le deuxième solvant.

Après évaporation, de préférence complète, du deuxième solvant, une solution nanocomposite homogène est obtenue. La solution finale possède la bonne viscosité pour être déposée et former un matériau composite homogène. Le solvant de cette solution est le premier solvant qui est le solvant d'application.

Lors de l'étape e), on dépose la solution nanocomposite finale sur un substrat. Cette solution nanocomposite peut être utilisée, avantageusement, pour le dépôt d'un film, par exemple à l'aide d'une tournette, ou le moulage d'une plaquette, par exemple par pressage à chaud ou par injection dans un moule. Le film ou la plaquette sera ensuite séché au voisinage de la température d'ébullition du premier solvant pour l'éliminer.

On obtient ainsi un matériau composite homogène comprenant un polymère et des nanomatériaux (1D, 2D ou 3D).

Bien que cela ne soit aucunement limitatif, l'invention trouve particulièrement des applications dans le domaine des capacités (utilisant comme diélectrique un polymère avec des nanomatériaux) et des inductances (utilisant comme matériau magnétique un polymère avec des nanoparticules magnétiques).

L'invention trouve également des applications dans le domaine des revêtements de surface (anti-usure, hydrophobe, optique etc.). En fonction des nanomatériaux choisis, il est en effet possible de modifier la dureté d'une résine, ou encore l'indice optique d'un revêtement.

## Revendications

1. Procédé de fabrication d'un matériau composite comprenant un polymère et des nanomatériaux, le procédé comportant les étapes suivantes :
a) dissolution du polymère dans un premier solvant, moyennant quoi on obtient une première solution,
b) dispersion des nanomatériaux dans un deuxième solvant différent du premier solvant, moyennant quoi on obtient une deuxième solution ;
c) mélange des deux solutions, moyennant quoi on obtient une troisième solution,
d) chauffage de la troisième solution de manière à faire évaporer au moins 10% volumique du deuxième solvant, et de préférence de manière à faire évaporer totalement le deuxième solvant, moyennant quoi on obtient une solution finale,
e) dépôt de la solution finale sur un substrat ou injection de la solution finale dans un moule et évaporation du premier solvant, et éventuellement évaporation de la fraction volumique du deuxième solvant non évaporée lors de l'étape d),
**caractérisé en ce que** le deuxième solvant a un point d'ébullition inférieur d'au moins 30°C à celui du premier solvant, et
**caractérisé en ce que** la viscosité de la solution finale est égale à 20% près et, de préférence, égale à 10% près à la viscosité de la première solution.

2. Procédé selon la revendication 1, **caractérisé en ce que** le deuxième solvant a un point d'ébullition inférieur d'au moins 50°C à celui du premier solvant.

3. Procédé selon l'une des revendications 1 et 2, **caractérisé en ce que** le premier solvant a un point d'ébullition supérieur à 100°C et **en ce que** le deuxième solvant a un point d'ébullition inférieur à 90°C.

4. Procédé selon l'une quelconque des revendications précédentes, **caractérisé en ce que** le premier solvant est choisi parmi les acétates d'éther méthylique de propylène glycol (PGMEA), les Éthyl Lactates, le xylène, l'anisole et le cyclopentanone.

5. Procédé selon l'une quelconque des revendications précédentes, **caractérisé en ce que** le deuxième solvant est choisi parmi l'acétone, le benzène, la butadone, l'acétate d'éthyle, l'hexane, le 2-propanol, le chloroforme, le dichloroéthane et le dichlorométhane.

6. Procédé selon les revendications 4 et 5, **caractérisé en ce que** le premier solvant est le PGMEA et **en ce que** le deuxième solvant est le chloroforme.

7. Procédé selon l'une quelconque des revendications précédentes, **caractérisé en ce que** le polymère est choisi parmi les polystyrènes, les polyépoxydes, les poly(fluorure de vinylidènes), les polyméthacrylates et les polyétherimides.

8. Procédé selon l'une quelconque des revendications 1 à 7, **caractérisé en ce que** les nanomatériaux sont choisis parmi des nanoparticules, de préférence des nanoparticules à structure cœur coquille, par exemple formées d'un cœur métallique à base de Cu, Ni, Co ou Fe, enrobé par une couche de carbone.

9. Procédé selon la revendication précédente, **caractérisé en ce que** les nanoparticules sont magnétiques.

10. Procédé selon l'une des revendications 1 à 7, **caractérisé en ce que** les nanomatériaux sont des nanoparticules ferroélectriques.

11. Procédé selon l'une des revendications 1 à 7, **caractérisé en ce que** les nanomatériaux sont des semi-conducteurs à grand gap.

12. Procédé selon l'une quelconque des revendications 1 à 7, **caractérisé en ce que** les nanomatériaux sont choisis parmi les nano-feuillets de nitrure de bore hexagonal (h-BN) et les nano-diamants.

13. Procédé selon l'une quelconque des revendications précédentes, **caractérisé en ce que** le deuxième solvant est un solvant chloré et **en ce que** les nanomatériaux sont nitrurés ou carbonés.

14. Procédé selon l'une quelconque des revendications précédentes, **caractérisé en ce que** l'étape b) est réalisée sous ultrasons.

## Patentansprüche

1. Verfahren zur Herstellung eines Verbundmaterials, das ein Polymer und Nanomaterialien umfasst, wobei das Verfahren die folgenden Schritte aufweist:
a) Auflösen des Polymers in einem ersten Lösungsmittel, wodurch eine erste Lösung erhalten wird,
b) Dispergieren der Nanomaterialien in einem zweiten Lösungsmittel, das sich von dem ersten Lösungsmittel unterscheidet, wodurch eine zweite Lösung erhalten wird;
c) Mischen der beiden Lösungen, wodurch eine dritte Lösung erhalten wird,
d) Erhitzen der dritten Lösung, um mindestens 10 Vol.-% des zweiten Lösungsmittels zu verdampfen, und vorzugsweise, um das zweite Lösungsmittel vollständig zu verdampfen, wodurch eine Endlösung erhalten wird,
e) Absetzen der Endlösung auf ein Substrat oder Injizieren der Endlösung in eine Form und Verdampfen des ersten Lösungsmittels, und eventuell Verdampfen des Volumenanteils des zweiten Lösungsmittels, der in Schritt d) nicht verdampft ist,
**dadurch gekennzeichnet, dass** das zweite Lösungsmittel einen um mindestens 30°C niedrigeren Siedepunkt als das erste Lösungsmittel hat, und
**dadurch gekennzeichnet, dass** die Viskosität der Endlösung innerhalb von 20% und vorzugsweise innerhalb von 10% der Viskosität der ersten Lösung entspricht.

2. Verfahren nach Anspruch 1, **dadurch gekennzeichnet, dass** das zweite Lösungsmittel einen um mindestens 50°C niedrigeren Siedepunkt hat als das erste Lösungsmittel.

3. Verfahren nach einem der Ansprüche 1 und 2, **dadurch gekennzeichnet, dass** das erste Lösungsmittel einen Siedepunkt über 100°C und das zweite Lösungsmittel einen Siedepunkt unter 90°C hat.

4. Verfahren nach einem der vorhergehenden Ansprüche, **dadurch gekennzeichnet, dass** das erste Lösungsmittel aus Propylenglykolmethyletheracetaten (PGMEA), Ethyllaktaten, Xylol, Anisol und Cyclopentanon ausgewählt ist.

5. Verfahren nach einem der vorhergehenden Ansprüche, **dadurch gekennzeichnet, dass** das zweite Lösungsmittel unter Aceton, Benzol, Butadon, Ethylacetat, Hexan, 2-Propanol, Chloroform, Dichlorethan und Dichlormethan ausgewählt ist.

6. Verfahren nach Anspruch 4 und 5, **dadurch gekennzeichnet, dass** das erste Lösungsmittel PGMEA und das zweite Lösungsmittel Chloroform ist.

7. Verfahren nach einem der vorhergehenden Ansprüche, **dadurch gekennzeichnet, dass** das Polymer unter Polystyrolen, Polyepoxiden, Poly(vinylidenfluorid), Polymethacrylaten und Polyetherimiden ausgewählt ist.

8. Verfahren nach einem der Ansprüche 1 bis 7, **dadurch gekennzeichnet, dass** die Nanomaterialien aus Nanopartikeln, vorzugsweise Nanopartikeln mit Schalenkernstruktur, ausgewählt sind, beispielsweise gebildet aus einem Metallkern auf Cu-, Ni-, Co- oder Fe-Basis, der von einer Kohlenstoffschicht umhüllt ist.

9. Verfahren nach dem vorhergehenden Anspruch, **dadurch gekennzeichnet, dass** die Nanopartikel magnetisch sind.

10. Verfahren nach einem der Ansprüche 1 bis 7, **dadurch gekennzeichnet, dass** die Nanomaterialien ferroelektrische Nanopartikel sind.

11. Verfahren nach einem der Ansprüche 1 bis 7, **dadurch gekennzeichnet, dass** die Nanomaterialien Großspalt-Halbleiter sind.

12. Verfahren nach einem der Ansprüche 1 bis 7, **dadurch gekennzeichnet, dass** die Nanomaterialien unter sechseckigen Bornitrid-Nanofolien (h-BN) und Nanodiamanten ausgewählt sind.

13. Verfahren nach einem der vorhergehenden Ansprüche, **dadurch gekennzeichnet, dass** das zweite Lösungsmittel ein chloriertes Lösungsmittel ist und dass die Nanomaterialien nitriert oder kohlenstoffhaltig sind.

14. Verfahren nach einem der vorhergehenden Ansprüche, **dadurch gekennzeichnet, dass** Schritt b) unter Ultraschall durchgeführt wird.

## Claims

1. Method for manufacturing a composite material comprising a polymer and nanomaterials, the method comprising the following steps:
a) dissolution of the polymer in a first solvent, whereby a first solution is obtained,
b) dispersion of the nanomaterials in a second solvent, different from the first solvent, whereby a second solution is obtained,
c) mixing of the two solutions, whereby a third solution is obtained,
d) heating of the third solution so as to evaporate at least 10% by volume of the second solvent and preferably so as to evaporate totally the second solvent, whereby a final solution is obtained,
e) deposition of the final solution on a substrate or injection of the final solution into a mould and evaporation of the first solvent, and optionally evaporation of the volume fraction of the second solvent not evaporated during step d),
wherein the second solvent has a boiling point lower by at least 30°C than that of the first solvent, and
and wherein the viscosity of the final solution is equal to some 20% and preferably equal to some 10% of the viscosity of the first solution.

2. Method according to claim 1, wherein the second solvent has a boiling point lower by at least 50°C than that of the first solvent.

3. Method according to any one of claims 1 and 2, wherein the first solvent has a boiling point above 100°C and the second solvent has a boiling point below 90°C.

4. Method according to any one of the preceding claims, wherein the first solvent is chosen from among propylene glycol methyl ether acetates (PGMEA), ethyl lactates, xylene, anisole and cyclopentanone.

5. Method according to any one of the preceding claims, wherein the second solvent is chosen from among acetone, benzene, butanone, ethyl acetate, hexane, 2-propanol, chloroform, dichloroethane and dichloromethane.

6. Method according to claims 4 and 5, wherein the first solvent is PGMEA and the second solvent is chloroform.

7. Method according to any one of the preceding claims, wherein the polymer is chosen from among polystyrenes, polyepoxides, poly(vinylidene fluorides), polymethacrylates and polyetherimides.

8. Method according to any one of claims 1 to 7, wherein the nanomaterials are chosen from among nanoparticles, and preferably nanoparticles with core-shell structure, for example formed of a metal core based on Cu, Ni, Co or Fe, coated by a layer of carbon.

9. Method according to the preceding claim, wherein the nanoparticles are magnetic.

10. method according to any one of claims 1 to 7, wherein the nanomaterials are ferroelectric nanoparticles.

11. Method according to any one of claims 1 to 7, wherein the nanomaterials are wide gap semiconductors.

12. Method according to any one of claims 1 to 7, wherein the nanomaterials are chosen from among nanosheets of hexagonal boron nitride (h-BN) and nanodiamonds.

13. Method according to any one of the preceding claims, wherein the second solvent is a chlorinated solvent and the nanomaterials are nitride-containing or carbon-containing.

14. Method according to any one of the preceding claims, wherein step b) is carried out under ultrasounds.
